# EUROPEAN PATENT APPLICATION

(11) **EP 3 690 790 A1**
(43) Date of publication of application: **05.08.2020**
(21) Application number: 17927628.2
(22) Date of filing: 29.09.2017
(51) Int. Cl.: G06Q 40/06

(54) **PORTFOLIO PRESENTATION PROGRAM, PORTFOLIO PRESENTATION METHOD, AND PORTFOLIO PRESENTATION DEVICE**

(71) Applicant: Fujitsu Limited, Kawasaki-shi, Kanagawa 211-8588 (JP)
(72) Inventor: WANG, Xin, Kawasaki-shi Kanagawa 211-8588 (JP); USUI, Masahiro, Kawasaki-shi Kanagawa 211-8588 (JP); KODA, Shiho, Otsu-shi Shiga 520-0043 (JP); YUKI, Hiroko, Kawasaki-shi Kanagawa 211-8588 (JP); TATSUMA, Kazuki, Kawasaki-shi Kanagawa 211-8588 (JP)
(74) Representative: Hoffmann Eitle
(86) International application number: PCT/JP2017/035699
(87) International publication number: WO 2019/064567

(57) **Abstract**

A portfolio presentation program causes a computer to execute a process (13b) of accepting answers to a questionnaire that includes a plurality of questions. The portfolio presentation program causes the computer to execute a process (13c) of analyzing the accepted answers and generating evaluation results of the answers in each of a plurality of evaluation axes. The portfolio presentation program causes the computer to execute a process (13d) of referring to a storage unit that stores, among the plurality of evaluation axes, the evaluation axes and portfolios of financial assets in association with each other and presenting a portfolio of financial assets that corresponds to the accepted one or more evaluation axes.

## Description

### TECHNICAL FIELD

The present invention relates to a portfolio presentation program, a portfolio presentation method, and a portfolio presentation apparatus.

### BACKGROUND ART

There has conventionally been known a technique of setting risk tolerance and a desired profit and determining a financial product on the basis of the set content when a user purchases a financial product. Furthermore, there has also been known a technique of displaying content including questions about an attribute, personality, and psychology of a customer on a terminal of the customer and classifying the customer on the basis of answers to the questions and a web page browsing history.

### CITATION LIST

### PATENT DOCUMENT

Patent Document 1: Japanese Laid-open Patent Publication No. 2000-250997
Patent Document 2: Japanese Laid-open Patent Publication No. 2002-150153

### SUMMARY OF INVENTION

### TECHNICAL PROBLEM

However, conventional techniques are problematic in that it is difficult to present a portfolio from a plurality of viewpoints. In the technique of determining a financial product on the basis of set content, the financial product is determined from a viewpoint based on the set content, and thus it is difficult to present a portfolio from a plurality of viewpoints. Further, in the technique of classifying a customer on the basis of answers to questions and a web page browsing history, it is difficult to present a portfolio to the customer.

In one aspect, an object is to provide a portfolio presentation program, a portfolio presentation method, and a portfolio presentation apparatus capable of presenting a portfolio from a plurality of viewpoints.

### SOLUTION TO PROBLEM

In one aspect, a portfolio presentation program causes a computer to execute a process of accepting input of answers to a questionnaire that includes a plurality of questions. The portfolio presentation program causes the computer to execute a process of analyzing the accepted answers and generating evaluation results of the answers in each of a plurality of evaluation axes. The portfolio presentation program causes the computer to execute a process of, when selection of one or more evaluation axes from the plurality of evaluation axes is accepted, referring to a storage unit that stores the evaluation axes and portfolios of financial assets in association with each other. The portfolio presentation program causes the computer to execute a process of presenting a portfolio of financial assets that corresponds to the accepted one or more evaluation axes.

### ADVANTAGEOUS EFFECTS OF INVENTION

According to one aspect, it is possible to present a portfolio from a plurality of viewpoints.

### BRIEF DESCRIPTION OF DRAWINGS

FIG. 1 illustrates an example of a configuration of a system according to a first embodiment.
FIG. 2 illustrates an example of customer information according to the first embodiment.
FIG. 3 illustrates an example of product information according to the first embodiment.
FIG. 4 is a functional block diagram illustrating an example of a configuration of a portfolio presentation apparatus according to the first embodiment.
FIG. 5 (5A and 5B) illustrates an example of questionnaire information according to the first embodiment.
FIG. 6 (6A and 6B) illustrates an example of portfolio information according to the first embodiment.
FIG. 7 illustrates an example of persona attribute information according to the first embodiment.
FIG. 8 illustrates an example of template information according to the first embodiment.
FIG. 9 illustrates an example of operation information according to the first embodiment.
FIG. 10 is a flowchart illustrating an example of a process in the system according to the first embodiment.
FIG. 11 is a flowchart illustrating an example of an acceptance process according to the first embodiment.
FIG. 12 illustrates an example of an input screen according to the first embodiment.
FIG. 13 is a flowchart illustrating an example of a presentation process according to the first embodiment.
FIG. 14 illustrates an example of a presentation screen according to the first embodiment.
FIG. 15 is a flowchart illustrating an example of a display process according to the first embodiment.
FIG. 16 illustrates an example of a display screen according to the first embodiment.
FIG. 17 illustrates an exemplary hardware configuration of a computer that executes a portfolio presentation program.

### DESCRIPTION OF EMBODIMENTS

Hereinafter, embodiments of a portfolio presentation program, a portfolio presentation method, and a portfolio presentation apparatus disclosed in the present application will be described in detail with reference to the drawings. Note that the present invention is not limited by these embodiment. Further, the each embodiments described below may be appropriately combined as long as no contradiction occurs. Note that, in the following description, a financial asset portfolio may be simply referred to as "portfolio".

### [First Embodiment]

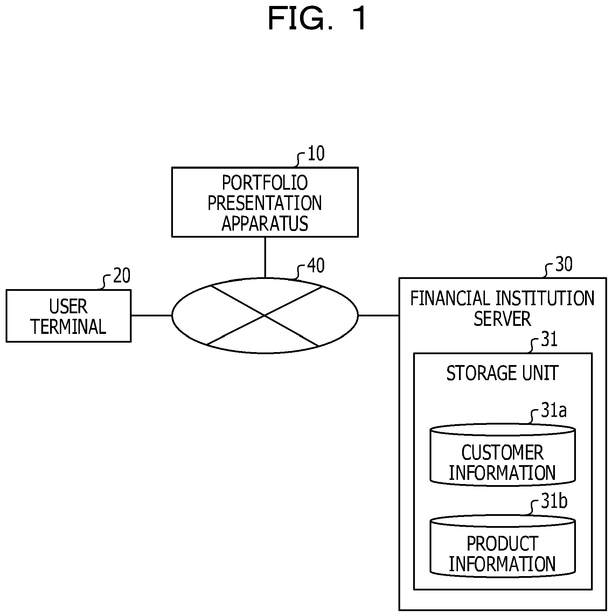

FIG. 1 illustrates a configuration of a system according to a first embodiment. The system illustrated in FIG. 1 includes a portfolio presentation apparatus 10, a user terminal 20, and a financial institution server 30, and the portfolio presentation apparatus 10, the user terminal 20, and the financial institution server 30 are communicably connected to each other via a network 40.

The user terminal 20 is an information processing terminal possessed by a user, and is achieved by a mobile communication terminal such as a tablet terminal or a smartphone, a portable personal computer, or the like. The user transmits/receives data to/from the portfolio presentation apparatus 10 by using an application program (hereinafter, also referred to as "application") installed in the user terminal 20. Note that the user terminal 20 may directly communicate with the portfolio presentation apparatus 10 via wireless communication such as Bluetooth (registered trademark), instead of via the network 40.

The financial institution server 30 is a server apparatus that is used by financial institutions such as banks and securities companies to provide financial services. For example, the financial institution server 30 provides services such as Internet banking and online trading of financial products.

As illustrated in FIG. 1, the financial institution server 30 includes a storage unit 31. The storage unit 31 is a device that stores data for use in various programs such as an operating system (OS) and application programs executed by the financial institution server 30. For example, the storage unit 31 is implemented as a main storage device for the portfolio presentation apparatus 10. For example, the storage unit 31 can be various semiconductor memory elements, such as a random access memory (RAM) and a flash memory. Further, the storage unit 31 can also be implemented as an auxiliary storage device. In this case, a hard disk drive (HDD), an optical disk, a solid state drive (SSD), or the like can be adopted. The storage unit 31 stores customer information 31a and product information 31b as an example.

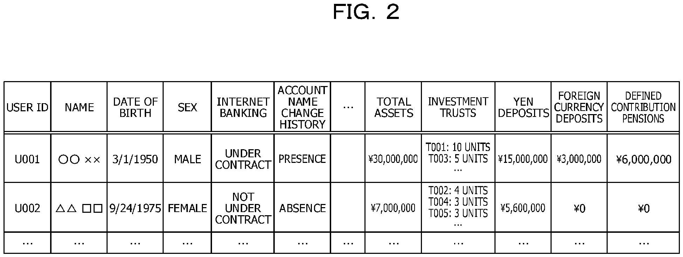

The customer information 31a manages information regarding customers of financial services provided by the financial institution server 30. FIG. 2 illustrates an example of the customer information according to the first embodiment. As illustrated in FIG. 2, the customer information 31a includes a user ID, a name, a date of birth, sex, Internet banking, an account name change history, total assets, investment trusts, yen deposits, foreign currency deposits, and defined contribution pensions.

In FIG. 2, the user identifier (ID) represents identification information for identifying a user who receives provision of a financial service. The Internet banking represents information indicating whether or not the user is under contract for Internet banking. The account name change history represents information indicating whether or not there is a history in which the user has changed his/her account name. The total assets represent total assets of the user. The investment trusts, the yen deposits, the foreign currency deposits, and the defined contribution pensions represent holding statuses of financial assets of the user in the respective forms.

As illustrated in FIG. 2, for example, a user having a user ID "U001" is a user whose name is "○○ ××", date of birth is "1950/3/1", and sex is "male" and who is under contract for Internet banking and has a history of changing his account name. Further, the user having the user ID "U001" has total assets of ¥ 30,000,000, yen deposits of ¥ 15,000,000, foreign currency deposits of ¥ 3,000,000, and defined contribution pensions of ¥ 6,000,000. Further, the user having the user ID "U001" has ten units of an investment trust having a product ID "T001" and five units of an investment trust having a product ID "T003".

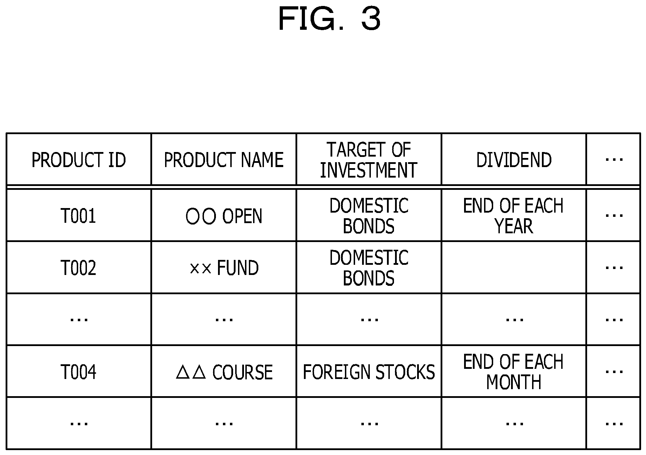

The product information 31b manages information regarding financial products managed by the financial institution server 30. FIG. 3 illustrates an example of the product information according to the first embodiment. As illustrated in FIG. 3, the product information 31b includes a product ID, a product name, a target of investment, and a dividend.

In FIG. 3, the product ID represents identification information for identifying a financial product. The target of investment represents information indicating a target of investment targeted by the financial product. The dividend represents information indicating a timing at which a dividend is generated.

Herein, in this embodiment, all the financial products included in the product information 31b are investment trusts. As illustrated in FIG. 3, for example, the investment trust having the product ID "T001" is an investment trust whose target of investment is domestic bonds and dividend is paid at the end of each year.

### [Functional Blocks]

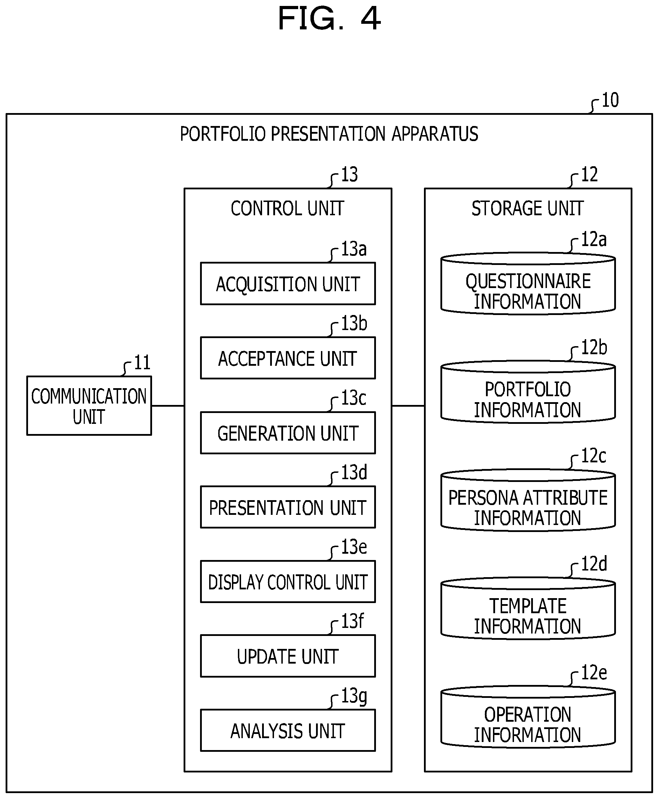

Next, the portfolio presentation apparatus 10 in this embodiment will be described with reference to FIG. 4. FIG. 4 is a functional block diagram illustrating an example of a configuration of the portfolio presentation apparatus according to the first embodiment. The portfolio presentation apparatus 10 can acquire data from the financial institution server 30 and present a portfolio to the user via the user terminal 20.

As an embodiment, the portfolio presentation apparatus 10 can be implemented by causing a desired computer to install a portfolio presentation program in which the above update control process is managed in the form of package software or online software. For example, the portfolio presentation apparatus 10 can be implemented by causing an information processing apparatus used by an administrator to install the above portfolio presentation program. In addition, the portfolio presentation apparatus 10 can be implemented by causing a server apparatus that accommodates the information processing apparatus used by the above administrator or the like as a client terminal to install the above portfolio presentation program. In this case, the portfolio presentation apparatus 10 may be implemented as a part of a financial system that provides financial services, or may be implemented as a cloud that manages services achieved by the above process by outsourcing.

Herein, the portfolio presentation apparatus 10 presents a portfolio on the basis of results of answers of the user to a questionnaire. In the following description, the user who answers the questionnaire will be referred to as "answering user". The answering user may or may not use a financial service provided from the financial institution server 30. As an example, the answering user is a user who considers purchasing an investment trust in the future but has low financial literacy. The portfolio presentation apparatus 10 of this embodiment can present a portfolio to such a user from a plurality of viewpoints.

FIG. 4 illustrates functional units corresponding to the reference signs 11 to 13. However, those functional units are merely an example, and some of the illustrated functional units may be omitted, or functional units other than those illustrated in FIG. 4 may be included in the portfolio presentation apparatus 10. For example, in a case where the information processing apparatus used by the administrator is implemented as the portfolio presentation apparatus 10, the portfolio presentation apparatus 10 may include functional units that a personal computer, a mobile terminal device, or the like standardly includes, e.g., functional units such as an input device and an image or audio output device.

As illustrated in FIG. 4, the portfolio presentation apparatus 10 includes a communication unit 11, a storage unit 12, and a control unit 13 merely as an example. Note that a solid line indicating a relationship between input and output of data is drawn in FIG. 4, but FIG. 4 merely illustrates a minimum part for the convenience of explanation. That is, input and output of data regarding each processing unit are not limited to the example in FIG. 4, and input and output of data other than those illustrated in FIG. 4, e.g., input and output of data between a processing unit and another processing unit, between a processing unit and data, or between a processing unit and an external apparatus may be performed.

The communication unit 11 is a processing unit that controls data communication between external apparatuses such as the user terminal 20 and the financial institution server 30 and the control unit 13 via the network 40. The communication unit 11 corresponds to, for example, a communication device such as a network interface card (NIC).

The storage unit 12 is a device that stores data for use in various programs such as an OS and application programs executed by the control unit 13. For example, the storage unit 12 is implemented as a main storage device in the portfolio presentation apparatus 10. For example, the storage unit 12 can be various semiconductor memory elements, such as a RAM and a flash memory. Further, the storage unit 12 can also be implemented as an auxiliary storage device. In this case, an HDD, an optical disk, an SSD, or the like can be adopted.

The storage unit 12 stores questionnaire information 12a, portfolio information 12b, persona attribute information 12c, template information 12d, and operation information 12e as an example of data for use in the programs executed by the control unit 13. The storage unit 12 can store not only the above data but also other electronic data.

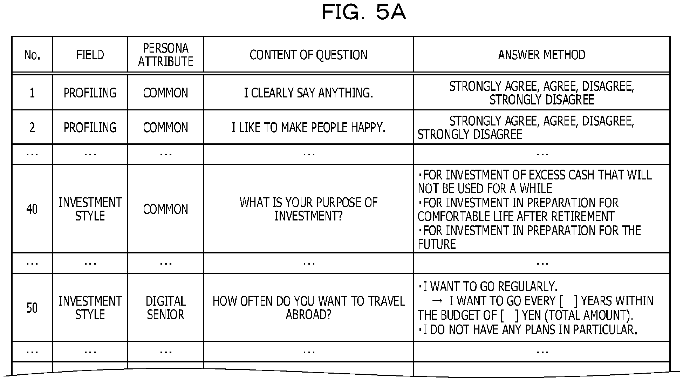

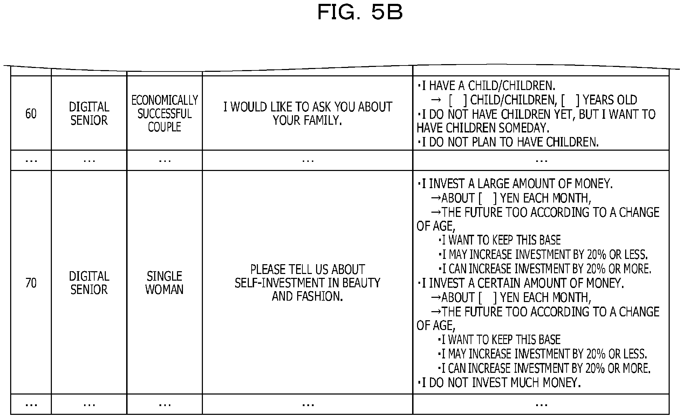

The questionnaire information 12a manages information regarding a questionnaire. FIG. 5 illustrates an example of the questionnaire information according to the first embodiment. As illustrated in FIG. 5, the questionnaire information 12a includes No., a field, a persona attribute, content of question, and an answer method. The questionnaire information 12a is assumed to be stored in the storage unit 12 in advance.

In FIG. 5, "No." represents information indicating the order of questions. The field represents information indicating a field of the question. The persona attribute represents information indicating a persona attribute of the user targeted by the question. The content of question represents a sentence displayed as a question sentence. The answer method is information indicating answer options and input items for the question.

For example, as illustrated in FIG. 5, in the question No. 1, the field is "profiling", and the persona attribute is "common". Further, the content of question of the question No.1 is "I clearly say anything." The answer method thereof is selecting one of "strongly agree", "agree", "disagree", and "strongly disagree".

Further, for example, as illustrated in FIG. 5, in the question No. 50, the field is "investment style", and the persona attribute is "digital senior". Furthermore, the content of question of the question No. 1 is "How often do you want to travel abroad?" Moreover, the answer method of the question No. 1 is first selecting one of "I want to go regularly." and "I don't have any plans in particular." and, when "I want to go regularly" is selected, inputting how often you want to go and how much you can pay.

The portfolio information 12b manages information regarding user evaluation and a portfolio. Information regarding financial assets in the portfolio information 12b is acquired by an acquisition unit 13a described below from the financial institution server 30 and is input to the storage unit 12. Further, the information regarding the user evaluation in the portfolio information 12b is generated by a generation unit 13c described below and is input to the storage unit 12.

Note that the storage unit 12 is an example of a storage unit that stores evaluation axes and portfolios of financial assets in association with each other. Further, the portfolio information 12b is information in which the evaluation axes are associated with the portfolios of financial assets. Furthermore, the portfolio information 12b is an example of information regarding assets.

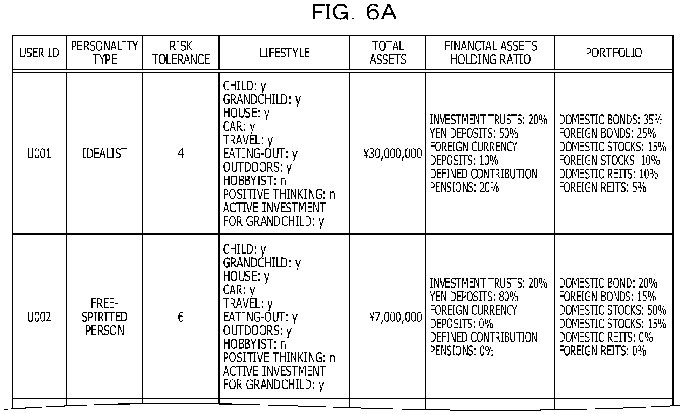

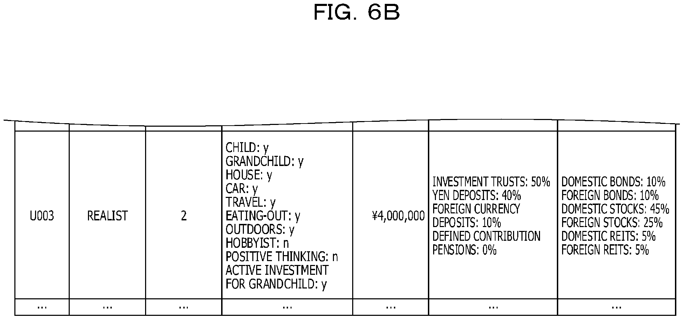

FIG. 6 illustrates an example of the portfolio information according to the first embodiment. As illustrated in FIG. 6, the portfolio information 12b includes a user ID, a personality type, risk tolerance, a lifestyle, total assets, a financial assets holding ratio, and a portfolio.

In FIG. 6, the user ID represents identification information for identifying a user. The personality type, the risk tolerance, and the lifestyle represents information indicating the user evaluation based on the questionnaire or the like. The total assets represent total assets of the user. The financial assets holding ratio represents a ratio of the financial assets of the user in respective forms. The portfolio represents a portfolio of financial products of the user.

Herein, in this embodiment, the portfolio is a portfolio of investment trusts. As illustrated in FIG. 6, the user having the user ID "U001" is a user whose personality type is "idealist" and risk tolerance is "4". Note that there are seven personality types in this embodiment. Further, the risk tolerance has seven levels in this embodiment.

Further, as illustrated in the lifestyle, the user having the user ID "U001" has a child, a grandchild, a house, and a car, likes to travel, to eat out, and the outdoors, is not a hobbyist, is not a positive thinker, and actively invests for the grandchild. The user having the user ID "U001" has total assets of ¥ 30,000,000, and has the following financial assets holding ratio: 20% for investment trusts, 50% for yen deposits, 10% for foreign currency deposits, and 20% for defined contribution pensions. Further, the user having the user ID "U001" has the following portfolio of the investment trusts: 35% for domestic bonds, 25% for foreign bonds, 15% for domestic stocks, 10% for foreign stocks, 10% for domestic REITs, and 5% for foreign REITs.

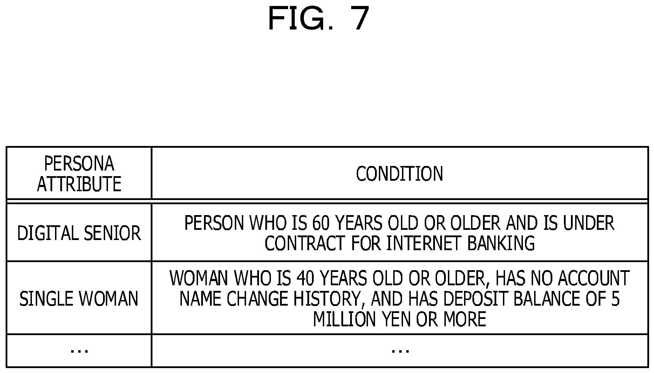

The persona attribute information 12c manages a condition of each persona attribute. FIG. 7 illustrates an example of the persona attribute information according to the first embodiment. As illustrated in FIG. 7, the persona attribute information 12c includes a persona attribute and a condition. The persona attribute information 12c is assumed to be stored in the storage unit 12 in advance.

As illustrated in FIG. 7, for example, a persona attribute of a user who is over 60 years old and is under contract for Internet banking is "digital senior". Further, a persona attribute of a user who is a woman over 40 years old, has no account name change history, and has a deposit balance of 5 million yen or more is "single woman".

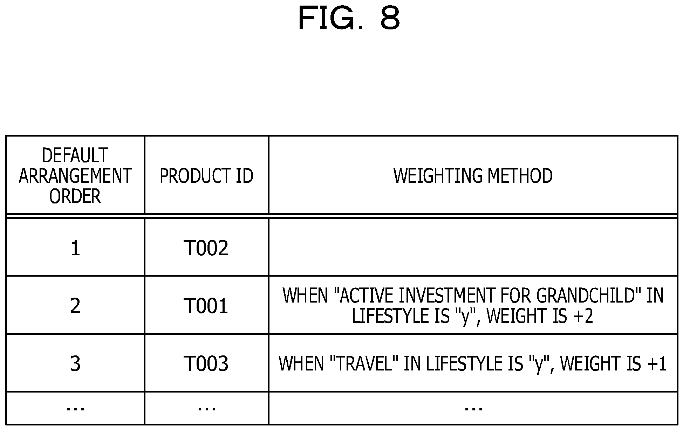

The template information 12d manages information regarding an arrangement order in which financial products are arranged. FIG. 8 illustrates an example of the template information according to the first embodiment. As illustrated in FIG. 8, the template information 12d includes a default arrangement order, a product ID, and a weighting method. The template information 12d is assumed to be stored in the storage unit 12 in advance. Note that the template information 12d is an example of a template with which the weight of each financial product are derivable from evaluation results. Further, the evaluation results are generated by the generation unit 13c described below.

As illustrated in FIG. 8, the default order of the financial product having the product ID "T001" is "2", and the weighting method is "when 'active investment for a grandchild' in the lifestyle is 'y', the weight is +2". Note that the lifestyle of the weighting method corresponds to the lifestyle of the portfolio information 12b.

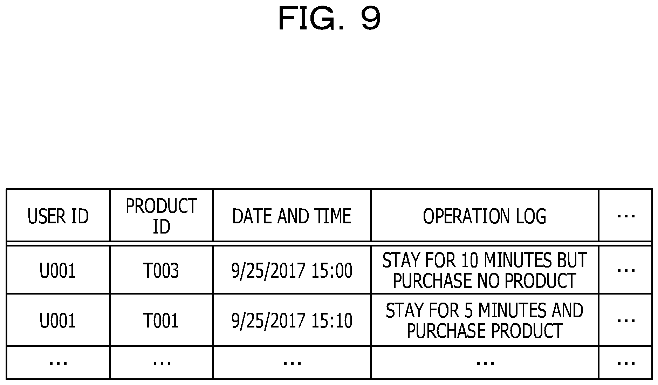

The operation information 12e manages user operation logs. FIG. 9 illustrates an example of the operation information according to the first embodiment. As illustrated in FIG. 9, the operation information 12e includes a user ID, a product ID, a date and time, and an operation log. The operation information 12e is acquired by a display control unit 13e described below and is input to the storage unit 12.

The operation information 12e manages an operation log on a screen on which a financial product is displayed. For example, as illustrated in FIG. 9, the user having the user ID "U001" stays on a display screen of a financial product having a product ID "T003" for 10 minutes at "2017/9/25 15:00" and has not purchased the financial product.

Next, referring back to FIG. 4, the control unit 13 is a processing unit that performs an overall process of the portfolio presentation apparatus 10. The control unit 13 is implemented by, for example, a central processing unit (CPU), a micro processing unit (MPU), or the like executing a program stored in an internal storage device by using a RAM as a working area. Further, the control unit 13 may be implemented by, for example, an integrated circuit such as an application specific integrated circuit (ASIC) or a field programmable gate array (FPGA). The control unit 13 includes the acquisition unit 13a, an acceptance unit 13b, the generation unit 13c, a presentation unit 13d, the display control unit 13e, an update unit 13f, and an analysis unit 13g. Note that the acquisition unit 13a, the acceptance unit 13b, the generation unit 13c, the presentation unit 13d, the display control unit 13e, the update unit 13f, and the analysis unit 13g are an example of an electronic circuit included in a processor or an example of a process executed by the processor.

The acquisition unit 13a acquires the customer information 31a and the product information 31b from the financial institution server 30, and inputs the above information to the storage unit 12 as the portfolio information 12b. Further, the acquisition unit 13a also acquires a financial service usage status of the answering user. The acquisition unit 13a may acquire the financial service usage status of the answering user from the financial institution server 30. Alternatively, the acquisition unit 13a may acquire information input to the user terminal 20 by the answering user as the financial service usage status. The acquisition unit 13a acquires, for example, total assets, a deposit balance, a status of contract for Internet banking, presence/absence of an account name change history, and the like of the answering user.

The acceptance unit 13b accepts answers to a questionnaire including a plurality of questions. The acceptance unit 13b provides the questionnaire included in the questionnaire information 12a for the user terminal 20. The acceptance unit 13b accepts answers to the questionnaire accepted from the user via the user terminal 20.

Further, the questionnaire may include a question common to all persona attributes and a question peculiar to a persona attribute of the answering user. In this case, the acceptance unit 13b acquires the persona attribute of the answering user from the persona attribute information 12c on the basis of the financial service usage status of the answering user acquired by the acquisition unit 13a. The acceptance unit 13b accepts answers to the questionnaire including a question determined on the basis of the financial service usage status.

The generation unit 13c analyzes the accepted answers and generates evaluation results of the answers in each of the plurality of evaluation axes. For example, the generation unit 13c generates evaluation results in three evaluation axes of personality type, risk tolerance, and lifestyle, and inputs the generated evaluation results to the storage unit 12 as the portfolio information 12b. Further, the generation unit 13c may also include persona information in the evaluation results.

When selection of one or more evaluation axes from the plurality of evaluation axes is accepted, the presentation unit 13d refers to the portfolio information 12b of the storage unit 12 and presents a portfolio of financial assets corresponding to the accepted one or more evaluation axes. Further, based on the portfolio information 12b, the presentation unit 13d can further present a holding status of assets whose difference from a total amount of assets corresponding to the answers falls within a predetermined range.

Further, the presentation unit 13d selects and presents part or all of information regarding the evaluation results together with the portfolio. For example, the presentation unit 13d can present the portfolio together with the personality type of the answering user. Further, the presentation unit 13d may select and present an evaluation result that is not negative for the answering user according to a preset selection criterion. Therefore, the answering user can confirm based on which evaluation result the portfolio is presented.

The display control unit 13e displays a display screen on which financial products corresponding to the portfolio presented by the presentation unit 13d are displayed so as to be purchasable. For example, the display control unit 13e displays the display screen on the user terminal 20. At this time, by referring to the weighting method of the template information 12d, the display control unit 13e can determine an arrangement order of the financial products on the display screen so that a financial product having a higher weight is displayed on an upper side. Further, when each financial product is purchased on the display screen, the update unit 13f updates the template so as to increase the weight of the purchased product.

The analysis unit 13g analyzes a relationship between the answers to the questionnaire and whether or not each financial product has been purchased on the display screen. The analysis unit 13g may perform analysis using collaborative filtering. Further, the analysis unit 13g may calculate purchase probability of each financial product by using, for example, regression analysis. At this time, based on the relationship analyzed by the analysis process and the answers to the questionnaire, the display control unit 13e further determines the arrangement order of the financial products on the display screen so that a financial product that is more likely to be purchased is displayed on the upper side. The display control unit 13e can determine the arrangement order of the financial products on the basis of the default arrangement order, the weight by weighting, and the analysis result performed by the analysis unit 13g.

### [Process flow]

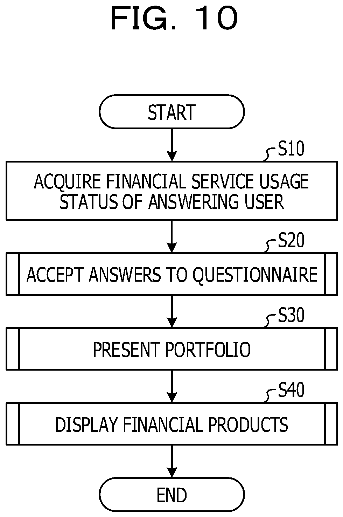

Next, a process flow in the system according to this embodiment will be described. FIG. 10 is a flowchart illustrating an example of a process in the system according to the first embodiment. First, the acquisition unit 13a of the portfolio presentation apparatus 10 acquires a financial service usage status of an answering user (S10). Next, the portfolio presentation apparatus 10 accepts answers to a questionnaire (S20). Then, the portfolio presentation apparatus 10 presents a portfolio (S30). Further, the portfolio presentation apparatus 10 displays financial products on the user terminal 20 (S40).

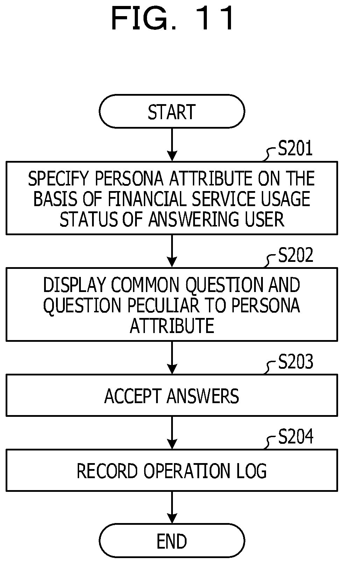

The acceptance process (S20) in which the portfolio presentation apparatus 10 accepts answers to a questionnaire will be described. FIG. 11 is a flowchart illustrating an example of the acceptance process according to the first embodiment. As illustrated in FIG. 11, first, the acceptance unit 13b specifies a persona attribute on the basis of the financial service usage status of the answering user (S201). For example, when the answering user is 65 years old and is under contract for Internet banking, the acceptance unit 13b refers to the persona attribute information 12c and acquires "digital senior" as the persona attribute of the answering user.

Next, the acceptance unit 13b causes the user terminal 20 to display a common question and a question peculiar to the persona attribute (S202). For example, when the persona attribute of the answering user is "digital senior", the acceptance unit 13b acquires, from the questionnaire information 12a, the content of a question for the persona attribute "common" and a question for the persona attribute "digital senior" and answer methods thereof. Then, the acceptance unit 13b displays an input screen including the acquired questions.

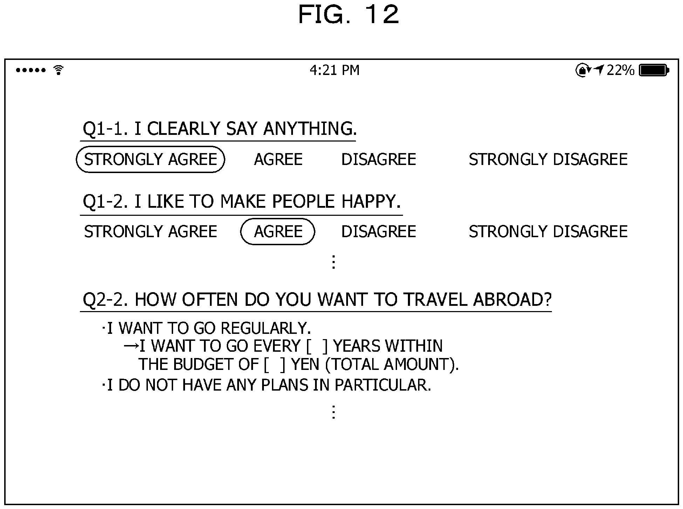

FIG. 12 illustrates an example of the input screen according to the first embodiment. As illustrated in FIG. 12, the questions are displayed on the input screen so that answers can be input. The acceptance unit 13b may display the questions so that the questions are divided into sections of respective fields in the questionnaire information 12a.

Then, the acceptance unit 13b accepts answers from the answering user (S203). Further, the acceptance unit 13b records an operation log of the answering user on the input screen, and inputs the operation log to the storage unit 12 as the operation information 12e (S204).

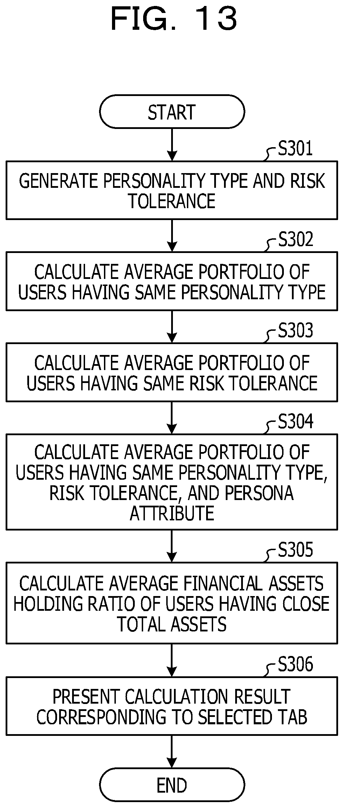

The presentation process (S30) in which the portfolio presentation apparatus 10 presents a portfolio will be described. FIG. 13 is a flowchart illustrating an example of the presentation process according to the first embodiment. Herein, the personality type and the risk tolerance are used as the evaluation axes. As illustrated in FIG. 13, the generation unit 13c first generates a personality type and risk tolerance of the answerer on the basis of the answers to the questionnaire (S301). Note that, in order to generate the personality type and the risk tolerance, existing personality test methods and risk tolerance calculation logics can be used.

Next, the presentation unit 13d refers to the portfolio information 12b and calculates an average portfolio of users having the same personality type as the answering user (S302). For example, when the personality type of the answering user is "idealist", the presentation unit 13d calculates an average portfolio of users whose personality type of the portfolio information 12b is "idealist".

Further, the presentation unit 13d refers to the portfolio information 12b and calculates an average portfolio of the users having the same risk tolerance as the answering user (S303). For example, when the risk tolerance of the answering user is 4, the presentation unit 13d calculates an average portfolio of the users whose risk tolerance of the portfolio information 12b is 4.

Further, the presentation unit 13d refers to the portfolio information 12b and calculates an average portfolio of users having the same personality type, risk tolerance, and persona attribute as the answering user (S304). For example, when the personality type of the answering user is "idealist" and the risk tolerance thereof is 4, the presentation unit 13d calculates an average portfolio of users whose personality type of the portfolio information 12b is "idealist" and risk tolerance is 4.

Note that, when the presentation unit 13d cannot acquire, from the portfolio information 12b, a user whose evaluation result in the selected evaluation axis is the same as that of the answering user, the presentation unit 13d may sequentially search for users having close evaluation results and calculate an average portfolio of the users having the close evaluation results.

Further, the presentation unit 13d refers to the portfolio information 12b and calculates an average financial assets holding ratio of users whose total assets are close to those of the answering user (S305). For example, the presentation unit 13d calculates the average financial assets holding ratio of users whose total assets are 90% to 110% of the total assets of the answering user.

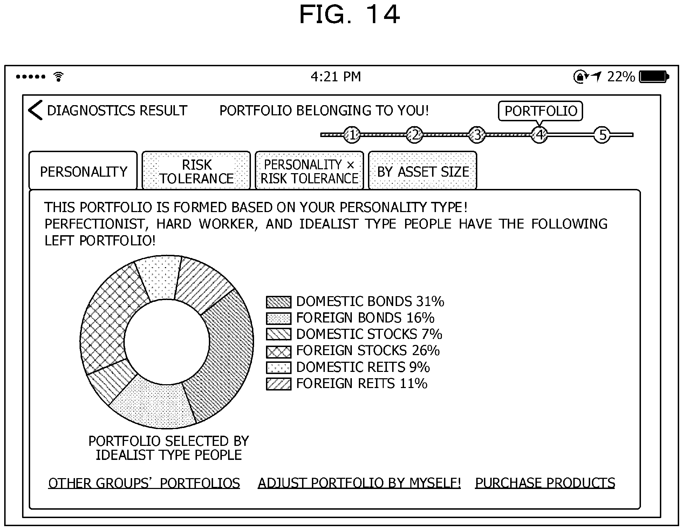

Then, the presentation unit 13d presents a calculation result corresponding to a tab selected on a presentation screen displayed on the user terminal 20 (S306). FIG. 14 illustrates an example of the presentation screen according to the first embodiment. As illustrated in FIG. 14, a portfolio is displayed in the form of numerical values and a graph on the presentation screen together with a message regarding the evaluation result of the personality type or the like. Further, a tab corresponding to each evaluation axis can be selected on the presentation screen, and the presentation unit 13d displays a portfolio corresponding to the selected tab.

When a "personality" tab is selected, the presentation unit 13d presents the average portfolio calculated in S302. Further, when a "risk tolerance" tab is selected, the presentation unit 13d presents the average portfolio calculated in S303. Furthermore, when a "character × risk tolerance" tab is selected, the presentation unit 13d presents the average portfolio calculated in S304. Moreover, when a "by asset size" tab is selected, the presentation unit 13d presents the average financial assets holding ratio calculated in S305.

Further, as illustrated in FIG. 14, links such as "Other groups' portfolios", "Adjust portfolio by myself!", and "Purchase products" are displayed on the presentation screen. For example, when the "Other groups' portfolio" link is clicked, portfolios corresponding to evaluation results different from the evaluation result of the answering user are displayed. Further, when the "Adjust portfolio by myself!" link is clicked, a screen on which the portfolio can be manually adjusted is displayed. Furthermore, when the "Purchase products" link is clicked, a display screen of a list of financial products is displayed.

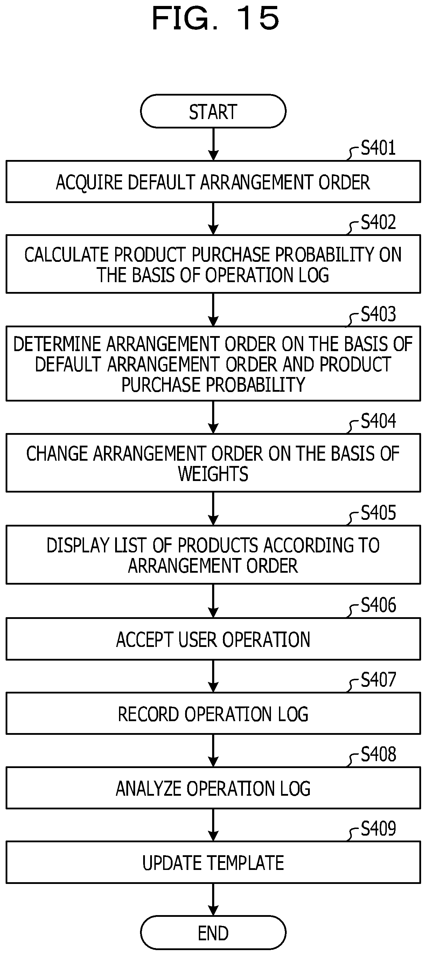

The display process (S40) in which the portfolio presentation apparatus 10 displays financial products will be described. FIG. 15 is a flowchart illustrating an example of a display process according to the first embodiment. As illustrated in FIG. 15, first, the display control unit 13e refers to the template information 12d and acquires a default arrangement order (S401).

Next, the display control unit 13e refers to the operation information 12e and calculates product purchase probability based on an operation log (S402). The display control unit 13e can calculate the product purchase probability by using a regression model created in advance by the analysis unit 13g.

For example, the analysis unit 13g acquires, from the operation information 12e, whether or not each user has purchased each financial product. Further, the analysis unit 13g also acquires the personality type and the risk tolerance of each user from the portfolio information 12b. Then, the analysis unit 13g can create a regression model in which the personality type and the risk tolerance are input and the purchase probability of each financial product is output. Further, the analysis unit 13g may analyze a product purchase tendency of a similar user by using collaborative filtering.

The display control unit 13e determines an arrangement order on the basis of the default arrangement order and the product purchase probability (S403). For example, the display control unit 13e can arrange financial products whose product purchase probability of the answering user is equal to or larger than a threshold value on an upper side, regardless of the default arrangement order.

Further, the display control unit 13e refers to the template information 12d and weights each financial product. For example, when the "active investment for a grandchild" in the lifestyle of the answering user is "y", the weight "2" is added to the financial product having the product ID "T001". Therefore, the display control unit 13e can arrange financial products having large weights on the upper side, regardless of the arrangement order determined in S403 (S404).

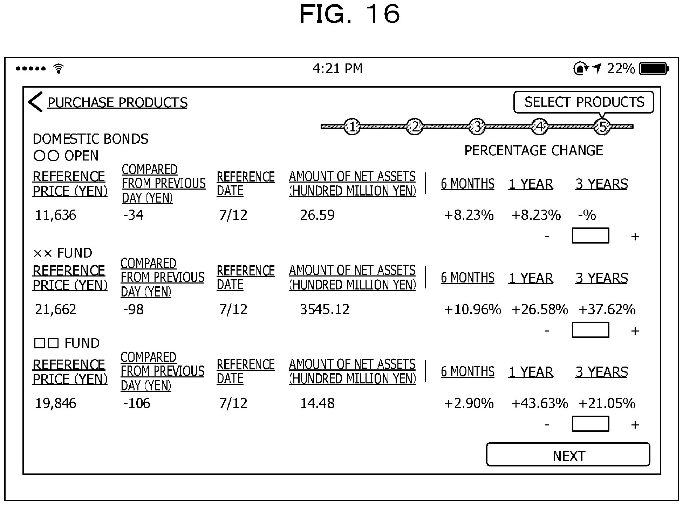

Then, the display control unit 13e causes the user terminal 20 to display a display screen on which the financial products are arranged according to the determined arrangement order (S405). FIG. 16 illustrates an example of the display screen according to the first embodiment. As illustrated in FIG. 16, the names and related information of the financial products are displayed on the display screen. Further, the answering user can increase and decrease the number of purchase units of each financial product by clicking a "+" button and a "-" button on the display screen.

Further, the display control unit 13e accepts operation by the answering user on the display screen (S406), records an operation log of the answering user on the display screen, and inputs the operation log to the storage unit 12 as the operation information 12e (S407).

Further, the analysis unit 13g analyzes the operation log (S408). Herein, the analysis result performed by the analysis unit 13g is used for, for example, calculating product purchase probability in order to display a display screen for the next answering user. By accumulating operation logs as described above, it is possible to determine a more effective arrangement order. Further, when a financial product to which the weight is added is purchased, the update unit 13f can update the template information 12d to further increase the weight added to the product in the weighting method (S409).

### [Effects]

As described above, the portfolio presentation program in this embodiment causes a computer to execute a process of accepting answers to a questionnaire including a plurality of questions. The portfolio presentation program causes the computer to execute a process of analyzing the accepted answers and generating evaluation results of the answers in each of a plurality of evaluation axes. The portfolio presentation program causes the computer to execute a process of, when selection of one or more evaluation axes from the plurality of evaluation axes is accepted, referring to a storage unit that stores the evaluation axes and portfolios of financial assets in association with each other and presenting a portfolio of financial assets corresponding to the accepted one or more evaluation axes.

Therefore, according to this embodiment, it is possible to present a portfolio from a plurality of viewpoints. For example, according to this embodiment, it is possible to present a portfolio from the viewpoints of a personality type, risk tolerance, or both the personality type and risk tolerance.

Further, the portfolio presentation program in this embodiment causes the computer to execute a process of accepting answers of a user to the questionnaire including a question determined on the basis of a financial service usage status. Therefore, it is possible to accept answers to questions suitable for the user, and thus it is possible to present a more effective portfolio.

Further, the portfolio presentation program in this embodiment causes the computer to execute a process of, based on information regarding assets, further presenting a holding status of assets whose difference from a total amount of assets corresponding to the answers falls within a predetermined range. Therefore, the user can know a holding status of assets of another user whose assets are close to those of the user, and can refer to the holding status when the user purchases a financial product.

Further, the portfolio presentation program in this embodiment causes the computer to further execute a process of displaying a display screen on which a financial product corresponding to the portfolio presented by the presentation process is displayed to be purchasable. Therefore, it is possible to prompt the user to purchase a financial product suitable for the user.

Further, the portfolio presentation program in this embodiment causes the computer to execute a process of referring to a template with which weights of the respective financial products are derivable from the evaluation results and determining an arrangement order of the financial products on the display screen so that a financial product having a higher weight is displayed on an upper side. Therefore, for example, it is possible to form a template of knowledge of a financial planner or the like and reflect the knowledge in the arrangement order of the products.

Further, the portfolio presentation program in this embodiment causes the computer to further execute a process of, when each financial product is purchased on the display screen, updating the template so as to increase the weight of the purchased product. Therefore, it is possible to reflect a result of purchase of the product in the arrangement order of the products.

Further, the portfolio presentation program in this embodiment causes the computer to execute a process of analyzing a relationship between the answers to the questionnaire and whether or not each financial product has been purchased on the display screen. The portfolio presentation program causes the computer to execute a process of, based on the relationship analyzed by the analysis process and the answers to the questionnaire, determining the arrangement order of the financial products on the display screen so that a financial product that is more likely to be purchased is displayed on the upper side. Therefore, it is possible to reflect a result of purchase of the product in the arrangement order of the products.

Further, the portfolio presentation program in this embodiment causes the computer to execute a process of selecting and presenting part or all of information regarding the evaluation results in the presentation process. For example, it is possible to prevent the user from being offended by not presenting negative information for the answering user among the information regarding the evaluation results.

### [Portfolio presentation program]

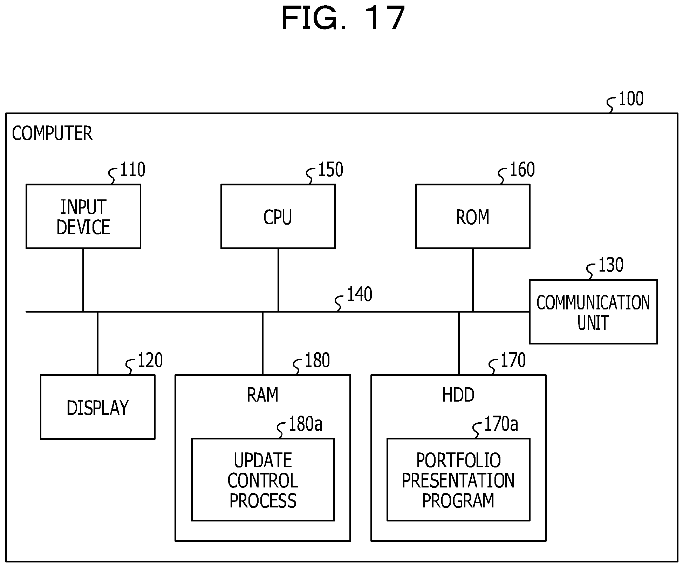

Further, various processes described in the above embodiment can be achieved by a computer such as a personal computer or a work station executing programs prepared in advance. In view of this, in the following description, an example of a computer that executes a portfolio presentation program having the same function as in the above embodiment will be described with reference to FIG. 17.

FIG. 17 illustrates an exemplary hardware configuration of a computer that executes a portfolio presentation program. As illustrated in FIG. 17, a computer 100 includes an input device 110, a display 120, and a communication unit 130. Moreover, the computer 100 further includes a CPU 150, a ROM 160, an HDD 170, and a RAM 180. The components 110 to 180 are each connected via a bus 140.

As illustrated in FIG. 17, the HDD 170 stores a portfolio presentation program 170a having the same function as the control unit 13 in the first embodiment described above. The portfolio presentation program 170a may be integrated or separated as with each component of the control unit 13 illustrated in FIG. 4. That is, all data in the first embodiment described above does not necessarily need to be stored in the HDD 170, and only data for use in the processes needs to be stored in the HDD 170.

In such an environment, the CPU 150 reads the portfolio presentation program 170a from the HDD 170 and develops the program on the RAM 180. As a result, the portfolio presentation program 170a functions as an update control process 180a as illustrated in FIG. 17. The update control process 180a develops various data read from the HDD 170 in an area allocated to the update control process 180a in a storage area of the RAM 180, and executes various processes by using the developed various data. Note that, in the CPU 150, all the processing units in the first embodiment described above do not necessarily need to operate, and a processing unit corresponding to a process to be executed may be virtually achieved.

Note that the above portfolio presentation program 170a does not necessarily need to be stored in the HDD 170 or the ROM 160 from the beginning. For example, each program may be stored in a "portable physical medium" such as a flexible disk (FD), a CD-ROM, a DVD disk, a magneto-optical disk, or an IC card to be inserted in the computer 100. Then, the computer 100 may acquire and execute each program from those portable physical media. Further, each program may be stored in another computer or server apparatus connected to the computer 100 via a public line, the Internet, a LAN, a WAN, or the like, and the computer 100 may acquire each program from those apparatuses and execute the program.

### REFERENCE SIGNS LIST

- 10: port folio presentation apparatus
- 11: communication unit
- 12: storage unit
- 12a: questionnaire information
- 12b: portfolio information
- 12c: persona attribute information
- 12d: template information
- 12e: operation information
- 13: control unit
- 13a: acquisition unit
- 13b: acceptance unit
- 13c: generation unit
- 13d: presentation unit
- 13e: display control unit
- 13f: update unit
- 13g: analysis unit
- 20: user terminal
- 30: financial institution server
- 31: storage unit
- 31a: customer information
- 31b: product information
- 40: network

## Claims

1. A portfolio presentation program for causing a computer to execute processes of:
accepting answers to a questionnaire that includes a plurality of questions;
analyzing the accepted answers and generating evaluation results of the answers in each of a plurality of evaluation axes; and
when selection of one or more evaluation axes from the plurality of evaluation axes is accepted, referring to a storage unit that stores the evaluation axes and portfolios of financial assets in association with each other and presenting a portfolio of financial assets that corresponds to the accepted one or more evaluation axes.

2. The portfolio presentation program according to claim 1, wherein
the acceptance process accepts the answers to the questionnaire that includes a question determined on the basis of a financial service usage status.

3. The portfolio presentation program according to claim 1, wherein
based on information that regards assets, the presentation process further presents a holding status of assets whose difference from a total amount of assets that corresponds to the answers falls within a predetermined range.

4. The portfolio presentation program according to claim 1, causing the computer to further execute a process of
displaying a display screen on which a financial product that corresponds to the portfolio presented by the presentation process is displayed to be purchasable.

5. The portfolio presentation program according to claim 4, wherein
the display process refers to a template with which weights of the respective financial products are derivable from the evaluation results, and determines an arrangement order of the financial products on the display screen so that a financial product that has a higher weight is displayed on an upper side.

6. The portfolio presentation program according to claim 5, causing the computer to further execute a process of
when each financial product is purchased on the display screen, updating the template so as to increase the weight of the purchased product.

7. The portfolio presentation program according to claim 4, causing the computer to further execute a process of
analyzing a relationship between the answers to the questionnaire and whether or not each financial product has been purchased on the display screen, wherein
based on the relationship analyzed by the analysis process and the answers to the questionnaire, the display process further determines the arrangement order of the financial products on the display screen so that a financial product that is more likely to be purchased is displayed on an upper side.

8. The portfolio presentation program according to claim 1, wherein
the presentation process selects and presents part or all of information that regards the evaluation results.

9. A portfolio presentation method, wherein
a computer executes processes of:
accepting answers to a questionnaire that includes a plurality of questions;
analyzing the accepted answers and generating evaluation results of the answers in each of a plurality of evaluation axes; and
when selection of one or more evaluation axes from the plurality of evaluation axes is accepted, referring to a storage unit that stores the evaluation axes and portfolios of financial assets in association with each other and presenting a portfolio of financial assets that corresponds to the accepted one or more evaluation axes.

10. A portfolio presentation apparatus, comprising:
an acceptance unit configured to accept answers to a questionnaire that includes a plurality of questions;
a generation unit configured to analyze the accepted answers and generate evaluation results of the answers in each of a plurality of evaluation axes; and
a presentation unit configured to, when selection of one or more evaluation axes from the plurality of evaluation axes is accepted, refer to a storage unit that stores the evaluation axes and portfolios of financial assets in association with each other and present a portfolio of financial assets that corresponds to the accepted one or more evaluation axes.
